# EUROPÄISCHE PATENTSCHRIFT

(11) **EP 2 703 823 B1**
(45) Veröffentlichungstag und Bekanntmachung des Hinweises auf die Patenterteilung: **06.07.2022**
(21) Anmeldenummer: 13004280.7
(22) Anmeldetag: 30.08.2013
(51) Int. Cl.: G01P 3/68, G08G 1/054, G08G 1/04, G01P 3/80, H04W 4/21

(54) **Raderkennung**
Wheel detection
Détection de roue

(30) Priorität: 04.09.2012 DE 102012017441
(43) Veröffentlichungstag der Anmeldung: 05.03.2014
(73) Patentinhaber: Kistler Holding AG, 8408 Winterthur (CH)
(72) Erfinder: Hartley, Keith, 91593 Burgbernheim (DE)

(56) Entgegenhaltungen:
- EP-A1- 0 877 253
- EP-A2- 0 397 984
- DE-A1- 3 030 229
- DE-C1- 19 549 003
- Gerhard Winter: "Einseitensensor ES 1.0", Wir informieren..., 31. Dezember 2005 (2005-12-31), Seiten 3-7, XP055095317, Tettnang, Germany Gefunden im Internet: URL:http://s209826979.online.de/web/downlo ads/esoNews02.05.pdf [gefunden am 2014-01-08]

## Beschreibung

Im technischen Umfeld der Verkehrsüberwachung hinsichtlich erfolgter Geschwindigkeitsübertretungen im Straßenverkehr sind insbesondere von der Anmelderin Sensoren bekannt, welche unter der Bezeichnung Einseitensensor als Kontrastsensitive Liniensensoren ausgebildet sind. Entsprechende Sensoren sind beispielsweise aus der DE 30 30 229 A1, der EP 0 877 253 A1 oder dem Produkt "Einheitssensor ES 1.0" der Anmelderin bekannt.

Derartige Sensoren ermitteln die Geschwindigkeit eines vorbeifahrenden Fahrzeugs indem durch vorzugsweise drei Kontrastsensoren je ein Kontrastverlauf über der Zeitachse aufgenommen wird. Die somit erhaltenen drei Kontrastverläufe werden analysiert und der Zeitversatz ermittelt, um welchen die Kontrastverläufe verschoben werden müssen, um zur Deckung gebracht zu werden. Aus dem ermittelten Zeitversatz und dem bekannten Abstand der Kontrastsensoren in ihrer Anordnung im Gehäuse des gesamten Sensors wird die Geschwindigkeit des Fahrzeugs ermittelt.

Die Kontrastsensoren sind üblicherweise als 2 Zonen Kontrastsensoren ausgebildet und erfassen bei maximalem Abstand vom Sensorkopf zum Fahrzeug in etwa eine Fläche von 0,125 m² bis 0,25 m² des vorbeifahrenden Fahrzeugs.

Insbesondere im Bereich der Erfassung und Beweisbeschaffung von Geschwindigkeitsübertretungen sind extrem hohe Anforderungen an die Zuverlässigkeit und Reproduzierbarkeit der ermittelten Geschwindigkeiten gestellt. Die ermittelten Werte werden regelmäßig gemeinsam mit simultan erstellten Fotografien als Beweismittel für Verstöße im Straßenverkehr herangezogen.

Problematisch bei der Erfassung der Kontrastverläufe sind Bestandteile des Fahrzeugs, welche selbst relativ zur Karosserie des Fahrzeugt bewegt werden. Insbesondere Räder, Radkappen und Reifen spielen dabei eine große Rolle. Die Lauffläche eines Reifens hat auf der Kontaktfläche mit der Straße die absolute Geschwindigkeit 0 und an ihrem obersten Punkt die Doppelte Geschwindigkeit des gesamten Fahrzeugs. Kontrastverläufe, welche aufgrund des Erfassungsfeldes der Kontrastsensoren auch Bereiche der Räder, Radkappen oder Reifen beinhalten, können daher zu extrem verfälschten Messwerten führen, wodurch die gesamte Messung nicht selten unbrauchbar im Sinne eines Beweismittels wird.

Aufgabe der Erfindung ist es daher, die Zuverlässigkeit derartiger Sensoren zu verbessern.

Diese Aufgabe wird durch ein Verfahren zu Betrieb eines Sensors nach dem Gegenstand des Verfahrensanspruchs 1 gelöst. Vorteilhafte Weiterbildungen und zweckmäßige Ausgestaltungen sind in den abhängigen Ansprüchen angegeben.

Die Erfindung betrifft ein Verfahren zum Betrieb eines Sensors zur Erfassung von Geschwindigkeitswerten zum Einsatz in Verkehrsüberwachungsanlagen, wobei der Sensor als kontrastsensitiver Liniensensor mit mindestens 2 voneinander beabstandeten Kontrastsensoren ausgebildet ist und ein zeitabhängiger Kontrastverlauf eines vor dem Sensor vorbeifahrenden Fahrzeugs erfasst wird, und aus dem Zeitversatz der erfassten Kontrastverläufe der mindestens 2 Sensoren die Geschwindigkeit des vorbeifahrenden Fahrzeugs ermittelt wird. Die Erfindung ist dadurch gekennzeichnet, dass bei der Ermittlung der Geschwindigkeit Ausschnitte des Kontrastverlaufs, welche einem oder mehreren bestimmten Fahrzeugteilen des vorbeifahrenden Fahrzeugs, welche Fahrzeugteile selbst relativ zur Karosserie des Fahrzeugs bewegt werden, nämlich einem Fahrzeugrad, einer Radkappe und/oder einem Reifen zugeordnet werden, unberücksichtigt bleiben, dass die Ausschnitte des Kontrastverlaufs anhand vorab ermittelter charakteristischer Muster bestimmt werden, indem gängige Fahrzeugräder, Radkappen und Reifen vorab erfasst werden und als Vergleichsverläufe in einer Datenbank gespeichert werden, und dass wenn entsprechende Vergleichsverläufe sodann in erfassten Kontrastverläufen auftreten, diese ausgeblendet werden.

Durch die selektive Ausblendung bestimmter Fahrzeugteile werden diese bei der Ermittlung der Geschwindigkeit nicht berücksichtigt und können das Ergebnis nicht verfälschen.

Auch eine Ermittlung der Ausschnitte über eine Echtzeitanalyse ist möglich. Dabei werden über mathematische Tranformationsalgorithmen die Ausschnitte der Räder, Radkappen und Reifen ermittelt und bei der Auswertung verworfen. Weiterhin ist in einer bevorzugten Ausführung vorgesehen, dass die Ausschnitte anhand einer Analyse versetzter Bereich innerhalb der erfassten Kontrastverläufe der mindestens 2 Sensoren bestimmt werden.

Durch eine Analyse erfasster Kontrastverläufe und die Ermittlung versetzter Bereiche, welche ggf. noch mit einer kursorisch vorab ermittelten Geschwindigkeit des Fahrzeugs und dem üblichen Verhalten von bewegten Fahrzeugteilen ergänzt werden, können Ausschnitte erkannt werden, welche für die präzise Ermittlung der Geschwindigkeit des Fahrzeugs auszublenden sind.

Eine weitere bevorzugte Ausführung betrifft das Verfahren bei welchem mehrere Kontrastsensoren mehrere Kontrastverläufe zeitabhängig an mehreren zueinander in Beziehung stehenden räumlich getrennten Orten aufnehmen, wobei der Abstand eines ersten Kontrastsensors zu einem zweiten Kontrastsensor verschieden zu einem Abstand zwischen dem zweiten Kontrastsensor und einem dritten Kontrastsensor ist.

Auf diese Weise werden auch Periodizitäten, welche beispielsweise bei rotationssymmetrischen Radkappen auftreten, vermieden. Diese Periodizitäten entstehen durch zufällige Übereinstimmung der erfassten Struktur einer Radkappe mit einer selbstähnlichen nächsten Struktur, die in ihrer Bahnbewegung während des Übergangs vom einen Kontrastsensor zum nächsten Kontrastsensor aus sich selbst abgebildet wurde. Dieser Effekt ist in ähnlicher Weise von Stroboskopen bekannt, bei denen ein Objekt scheinbar zum Stehen kommt, wenn es mit einer der Winkelperiodizität entsprechenden Frequenz angeblitzt wird.

Weiterhin betrifft die Erfindung einen Sensor zur Erfassung von Geschwindigkeitswerten zum Einsatz in Verkehrsüberwachungsanlagen, wobei der Sensor als kontrastsensitiver Liniensensor ausgebildet ist und in einer Datenverarbeitungseinheit das erfindungsgemäße Verfahren ausgeführt wird.

Die Datenverarbeitungseinheit ist dabei dem Sensor zugeordnet, vorzugsweise in diesen integriert ausgebildet.

Durch einen derartigen Sensor wird die Beweiskraft der ermittelten Geschwindigkeit erheblich verbessert.

In vorteilhafter Weise umfasst der kontrastsensitive Liniensensor mindestens 3 zueinander in Beziehung stehende räumlich getrennten Kontrastsensoren, wobei der Abstand eines ersten Kontrastsensors zu einem zweiten Kontrastsensor verschieden zu einem Abstand zwischen dem zweiten Kontrastsensor und einem dritten Kontrastsensor ist.

Eine prinzipielle Darstellung der Erfindung ist in den nachfolgend beschriebenen Figuren gegeben.

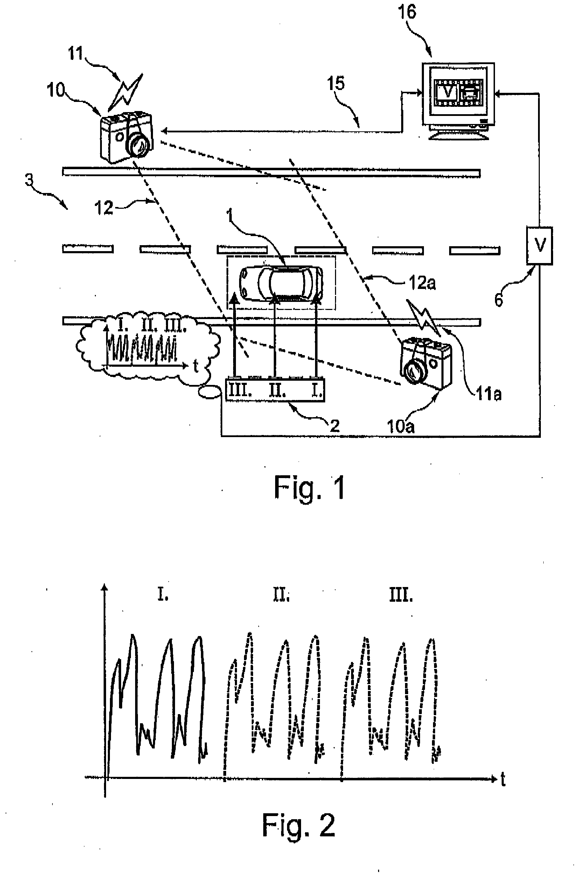

Figur 1 zeigt ein Fahrzeug 1 dessen Geschwindigkeit V durch einen Liniensensor 2 erfasst wird. Der Liniensensor nimmt dabei vorliegend drei Kontrastverläufe I., II. und III. über der Zeitachse t auf.

Das Fahrzeug 1, welches auf der Fahrbahn 3 fährt, und dessen Geschwindigkeitsdaten V über Kabel 6 an einen Computer 16 übermittelt werden, wird im Gesichtsfeld 12 der Kameraeinheit 10 mit einem Blitz 11 aufgenommen, falls eine Geschwindigkeitsübertretung stattfindet. Das Beweismittel in Form einer Fotografie wird sodann über eine weitere Datenübertragung 15 an einen Speicher, vorzugsweise einen Computer 16 übergeben. Bevorzugt kann vorgesehen sein, dass eine oder mehrere weitere Kameraeinheiten 10a mit einem oder mehreren Blitzen 11a angeordnet werden, um andere Gesichtsfelder 12a zu erfassen.

Figur 2 zeigt eine idealisierte Fassung der drei aufgenommenen Kontrastverläufe I., II. und III. Zur Ermittlung der Geschwindigkeit des Fahrzeugs werden die Verläufe nun durch Versatz entlang der Zeitachse t übereinander gelegt. Die aus dem notwendigen Versatz ermittelte Zeit und der bekannte Abstand der Kontrastsensoren im Gehäuse des Sensors 2 gibt Aufschluss über die zu ermittelnde Geschwindigkeit V.

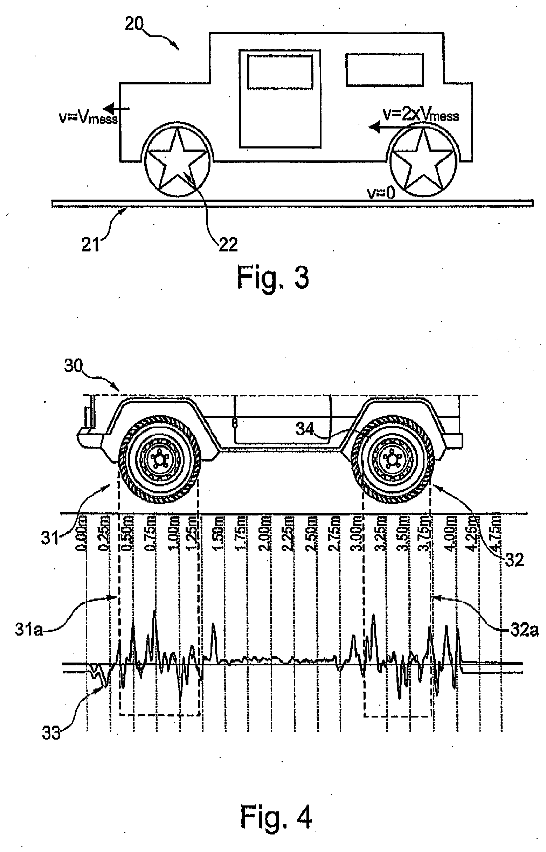

Figur 3 schildert schematisch das Problem der bewegten Fahrzeugteile. An einem Fahrzeug 20, welches sich über eine Straße 21 mit der Geschwindigkeit Vₘₑₛₛ bewegt, sind die Bahngeschwindigkeiten der Reifen nahezu an ihrem gesamten Umfang zu Vₘₑₛₛ verschieden. Da der Reifen auf der Straße in haftreibendem Kontakt aufliegt, ist die Relativgeschwindigkeit zur Straße dort 0. Dahingegen ist am obersten Punkt des Reifens die Bahngeschwindigkeit doppelt so groß, wie die tatsächliche Geschwindigkeit des Fahrzeugs, also 2x Vₘₑₛₛ.

Zusätzlich können rotationssymmetrische Bestandteile der Räder, wie beispielsweise die hier sternförmig angedeuteten Radkappen 22 zur oben beschriebenen Messwertverfälschung aufgrund periodischer Überdeckungen (Stroboskopeffekt) führen. Figur 4 zeigt eine Darstellung eines erfassten Fahrzeugbereichs 30 mit bewegten Teilen 31, 32 in Relation zu den erfassten Kontrastverläufen 33 mehrerer Kontrastsensoren. Die Kontrastverläufe sind dabei bereits übereinander in Deckung gebracht, um die Geschwindigkeit des Fahrzeugs zu ermitteln.

Im Bereich 31a, 32a des Kontrastverlaufs, welcher den bewegten Fahrzeugteilen 31, 32 zuzuordnen ist, werden Ausschnitte des Kontrastverlaufs ermittelt, die für eine Analyse der Kontrastverläufe und Ermittlung der Geschwindigkeit des Fahrzeugs ausgeblendet werden. Dabei können vollständige Bereiche 31a, 32a ausgeblendet werden oder nur diejenigen Anteile dieser Bereiche, welche tatsächlich den auf einer Bahnkurve bewegten Elementen zuzuordnen sind. Der Übergang 34 zwischen dem dunklen Element des Reifens und dem hellen Element der Radkappen ist beispielsweise durch den oben beschriebenen Fehler nicht betroffen und kann bei der Analyse berücksichtigt werden.

## Patentansprüche

1. - Verfahren zum Betrieb eines Sensors (2) zur Erfassung von Geschwindigkeitswerten zum Einsatz in Verkehrsüberwachungsanlagen,
- wobei der Sensor (2) als kontrastsensitiver Liniensensor mit mindestens 2 voneinander beabstandeten Kontrastsensoren ausgebildet ist und
- ein zeitabhängiger Kontrastverlauf (I., II., III.) eines vor dem Sensor (2) vorbeifahrenden Fahrzeugs (1, 20) erfasst wird, und aus dem Zeitversatz der erfassten Kontrastverläufe (I., II., III.) der mindestens 2 Sensoren die Geschwindigkeit (V) des vorbeifahrenden Fahrzeugs (1, 20) ermittelt wird,
**dadurch gekennzeichnet, dass**
bei der Ermittlung der Geschwindigkeit (V) Ausschnitte des Kontrastverlaufs (I., II., III.), welche einem oder mehreren bestimmten Fahrzeugteilen des vorbeifahrenden Fahrzeugs (1, 20), welche Fahrzeugteile selbst relativ zur Karosserie des Fahrzeugs (1, 20) bewegt werden, nämlich einem Fahrzeugrad, einer Radkappe und/oder einem Reifen zugeordnet werden, unberücksichtigt bleiben
dass die Ausschnitte des Kontrastverlaufs (I., II., III.) anhand vorab ermittelter charakteristischer Muster bestimmt werden, indem gängige Fahrzeugräder, Radkappen und Reifen vorab erfasst werden und als Vergleichsverläufe in einer Datenbank gespeichert werden,
und dass wenn entsprechende Vergleichsverläufe sodann in erfassten Kontrastverläufen (I., II., III.) auftreten, diese ausgeblendet werden.

2. Verfahren nach einem der vorangegangenen Ansprüche, **dadurch gekennzeichnet, dass** die Ausschnitte anhand einer Analyse versetzter Bereich innerhalb der erfassten Kontrastverläufe (I., II., III.) der mindestens 2 Sensoren bestimmt werden.

3. Verfahren nach einem der vorangegangenen Ansprüche, **dadurch gekennzeichnet, dass** mehrere Kontrastsensoren mehrere Kontrastverläufe (I., II., III.) zeitabhängig an mehreren zueinander in Beziehung stehenden räumlich getrennten Orten aufnehmen, wobei der Abstand eines ersten Kontrastsensors zu einem zweiten Kontrastsensor verschieden zu einem Abstand zwischen dem zweiten Kontrastsensor und einem dritten Kontrastsensor ist.

4. Sensor zur Erfassung von Geschwindigkeitswerten zum Einsatz in Verkehrsüberwachungsanlagen, wobei der Sensor (2) als kontrastsensitiver Liniensensor ausgebildet ist, **dadurch gekennzeichnet, dass** ein Verfahren nach einem oder mehreren der oben genannten Ansprüche in einer Datenverarbeitungseinheit ausgeführt wird, welche dem Sensor (2) zugeordnet, vorzugsweise in diesen integriert ausgebildet ist.

5. Sensor nach Anspruch 4, **dadurch gekennzeichnet, dass** der kontrastsensitive Liniensensor mindestens 3 zueinander in Beziehung stehende räumlich getrennten Kontrastsensoren umfasst, wobei der Abstand eines ersten Kontrastsensors zu einem zweiten Kontrastsensor verschieden zu einem Abstand zwischen dem zweiten Kontrastsensor und einem dritten Kontrastsensor ist.

## Claims

1. A method for operating a sensor (2) detecting velocity values for use in traffic monitoring systems,
- wherein said sensor (2) is configured as a contrast sensitive line sensor comprising at least 2 contrast sensors arranged at a distance from one another, and
- a time-dependent contrast profile (I., II., III.) of a vehicle (1, 20) passing in front of the sensor (2) is detected, and wherein the velocity (V) of the passing vehicle (1, 20) is determined from the time offset of the contrast profiles (I., II., III.) detected by the at least 2 sensors,
**characterized in that**
sections of the contrast profile (I., II., III.) are excluded from the detection of the velocity (V), which sections are attributable to one or more specific vehicle parts of the passing vehicle (1, 20), which vehicle parts are themselves moved with respect to the body of the vehicle (1, 20), namely a vehicle wheel, a hubcap and/or a tire,
**in that** said sections of the contrast profile (I., II., III.) are determined by using predetermined characteristic patterns which are detected by predetermining values of conventional vehicle wheels, hubcaps and tires and storing them as comparison profiles in a data base,
and **in that**, when the respective comparison profiles are then observed in detected contrast profiles (I., II., III.), these are eliminated.

2. The method according to any of the preceding claims, **characterized in that** said sections are determined on the basis of an analysis of offset regions within the detected contrast profiles (I., II., III.) of the at least 2 sensors.

3. The method according to any of the preceding claims, **characterized in that** a plurality of contrast sensors record a plurality of contrast profiles (I., II., III.) in a time-dependent manner at a plurality of locations related to and spatially separated from each other, wherein the spatial distance of a first contrast sensor and a second contrast sensor is different from a spatial distance between the second contrast sensor and a third contrast sensor.

4. A sensor detecting velocity values for use in traffic monitoring systems, wherein said sensor (2) is configured as a contrast sensitive line sensor, **characterized in that** a method according to one or more of the preceding claims is executed in a data processing unit which is associated with, preferably integrated in, said sensor (2) .

5. The sensor according to claim 4, **characterized in that** the contrast sensitive line sensor comprises at least 3 related and spatially separated contrast sensors, wherein the spatial distance of a first contrast sensor to a second contrast sensor is different from a distance between the second contrast sensor and a third contrast sensor.

## Revendications

1. Procédé d'exploitation d'un capteur (2) détectant des valeurs de vitesse et destiné à être utilisé dans des systèmes de surveillance du trafic,
- dans lequel ledit capteur (2) est conçu comme un capteur de ligne sensible au contraste comprenant au moins 2 capteurs de contraste espacés l'un de l'autre, et
- on détecte un profil de contraste (I., II., III.) en fonction du temps d'un véhicule (1, 20) passant devant ledit capteur (2), et dans lequel la vitesse (V) du véhicule passant (1, 20) est déterminée à partir du décalage temporel des profils de contraste (I., II., III.) détectés par les au moins 2 capteurs,
**caractérisé en ce qu'**on
exclue de ladite détection de la vitesse (V) des sections du profil de contraste (I., II., III.) qui sont attribuables à une ou plusieurs parties spécifiques du véhicule passant (1, 20), lesquelles parties du véhicule sont elles-mêmes déplacées par rapport au corps du véhicule (1, 20), à savoir une roue du véhicule, un enjoliveur et/ou un pneu,
**en ce que** lesdites sections du profil de contraste (I., II., III.) sont déterminées à l'aide de modèles caractéristiques prédéterminés en prédéterminant des valeurs de roues de véhicule, d'enjoliveurs et de pneus conventionnels et en les stockant dans une base de données comme profils de comparaison,
et **en ce que**, lorsque les profils de comparaison respectifs sont ensuite observés dans les profils de contraste (I., II., III.) détectés, ils sont éliminés.

2. Procédé selon l'une quelconque des revendications précédentes, **caractérisé en ce que** lesdites sections sont déterminées sur la base d'une analyse des régions décalées dans les profils de contraste (I., II., III.) détectés des au moins 2 capteurs.

3. Procédé selon l'une quelconque des revendications précédentes, **caractérisé en ce qu'**une pluralité de capteurs de contraste enregistre une pluralité de profils de contraste (I., II., III.) en fonction du temps à une pluralité d'emplacements liés et séparés spatialement les uns des autres, dans lequel la distance spatiale entre un premier capteur de contraste et un deuxième capteur de contraste est différente d'une distance spatiale entre le deuxième capteur de contraste et un troisième capteur de contraste.

4. Capteur détectant des valeurs de vitesse pour une utilisation dans des systèmes de surveillance du trafic, dans lequel ledit capteur (2) est conçu comme un capteur de ligne sensible au contraste, **caractérisé en ce qu'**un procédé selon une ou plusieurs des revendications précédentes est exécuté dans une unité de traitement de données associée à et de préférence intégrée dans ledit capteur (2).

5. Capteur selon la revendication 4, **caractérisé en ce que** le capteur de ligne sensible au contraste comprend au moins 3 capteurs de contraste liés et spatialement séparés, dans lequel la distance spatiale entre un premier capteur de contraste et un deuxième capteur de contraste est différente d'une distance entre le deuxième capteur de contraste et un troisième capteur de contraste.
